# EUROPEAN PATENT SPECIFICATION

(11) **EP 3 605 713 B1**
(45) Date of publication and mention of the grant of the patent: **11.05.2022**
(21) Application number: 18778257.8
(22) Date of filing: 27.03.2018
(51) Int. Cl.: H01M 50/409, H01M 50/426, H01M 50/446, H01M 50/581, H01M 50/572, H01M 50/40, H01M 50/46, H01M 10/058, H01M 10/0567, H01M 10/052, H01M 10/42

(54) **LITHIUM ION SECONDARY BATTERY**
LITHIUM-IONEN-SEKUNDÄRBATTERIE
ACCUMULATEUR AU LITHIUM-ION

(30) Priority: 30.03.2017 JP 2017066794
(43) Date of publication of application: 05.02.2020
(73) Proprietor: Mitsui Chemicals, Inc., Minato-ku Tokyo 105-7122 (JP)
(72) Inventor: YAMAMOTO Shinji, Sodegaura-shi Chiba 299-0265 (JP); MIZUNO Yu, Sodegaura-shi Chiba 299-0265 (JP); ENDO Yuri, Sodegaura-shi Chiba 299-0265 (JP)
(74) Representative: J A Kemp LLP
(86) International application number: PCT/JP2018/012290
(87) International publication number: WO 2018/181243

(56) References cited:
- WO-A1-2005/078828
- WO-A1-2010/134501
- WO-A1-2010/134501
- WO-A1-2013/136441
- JP-A- 2005 019 157
- JP-A- 2013 157 219
- JP-A- 2013 157 219
- JP-A- 2014 013 693
- JP-A- 2016 131 127
- JP-A- 2016 225 261
- KR-A- 20150 050 060
- US-A1- 2006 251 963
- US-A1- 2014 186 682
- US-A1- 2017 033 348

## Description

### Technical Field

] The present invention relates to a lithium ion secondary battery including a porous insulating layer between an electrode and a separator.

### Background Art

In recent years, lithium ion secondary batteries have been widely used as power sources for electronic devices such as portable phones, notebook personal computers, and the like, electric vehicles, power storages, or the like. Particularly, in recent years, there has been a rapidly increasing demand for a battery with a high capacity, a high power, and a high energy density, which can be mounted in a hybrid vehicle or an electric vehicle. In spite of the advantage of a high energy density, the lithium ion secondary battery is required to provide a sufficient measure for safety because lithium metal and a non-aqueous electrolyte are used.

For example, a non-aqueous electrolyte secondary battery disclosed in Patent Document 1 includes an anode in which an anode active material layer is formed on a current collector and a cathode in which a cathode active material layer is formed on the current collector, in which a porous protective film having a thickness of from 0.1 to 200 µm is formed on any one surface of the anode active material layer or the cathode active material layer. An active material to be generated until an electrode is stored in a battery can after an active material layer is formed is prevented from falling off and re-adhered by the protective film formed on the surface of the active material layer. Therefore, an internal short-circuit of the battery caused by the active material re-adhered on the surface of the electrode can be prevented, such that the non-aqueous electrolyte secondary battery having high reliability and safety can be obtained.

Patent Document 2 discloses a method of manufacturing a lithium ion secondary battery including a step of forming a cathode mixture layer by coating a surface of a cathode current collector with a cathode paste containing a cathode active material and water and a step of forming a porous insulating film by coating a surface of the cathode mixture layer with an insulating paste containing an inorganic oxide filler and an organic solvent, in which the cathode active material contains a composite oxide containing lithium and nickel, and a molar ratio of Ni to Li contained in the composite oxide is 60 mol% or less.

### Prior Art

### Patent Document

Patent Document 1: Japanese Patent No. 3371301
Patent Document 2: Japanese Patent Application Laid-Open (JP-A) No. 2010-21113
Document US2017/033348A1 discloses a separator, made of a polyolefin porous film and a porous layer of polyvinylidene fluoride (PVdF)-based resin and organic/inorganic fillers, that melts to provides a shutdown mechanism. Documents WO2010/134501A1 and KR2015 0050060A disclose a separator comprising PVDF and a copolymer of HFP-PVDF, respectively, as binding material.

### SUMMARY OF INVENTION

### Technical Problem

However, the porous protective film described in Patent Document 1 can suppress the falling off of the active material from the electrode at the time of producing a battery and prevent the generation of the internal short-circuit, but Patent Document 1 does not disclose that a heat generation suppression effect in a case in which an internal short-circuit occurs, such as a nailing test, a crushing test, or an overcharge test. In addition, the lithium ion secondary battery with a high power and a high capacity by suppressing a failure in a case of forming the porous insulating film on the surface of the cathode mixture layer is also provided in the manufacturing method described in Patent Document 2, but Patent Document 2 does not clearly disclose a heat generation suppression effect at the time of the internal short-circuit of the battery.

An object of the invention is to suppress heat generation at the time of an internal short-circuit of a battery by forming a porous insulating layer between an electrode and a separator.

### Solution to Problem

According to an embodiment of the invention, there is provided a lithium ion secondary battery including: a current collector; an electrode including a cathode or an anode that is provided on at least one surface of the current collector; a separator that separates the cathode and the anode from each other; a porous insulating layer that is formed between the cathode and the separator; and a non-aqueous electrolyte. The porous insulating layer is formed of a binding material containing polyvinylidene fluoride (PVDF) and a melting point lowering agent. The melting point lowering agent is a copolymer of a vinylidene fluoride monomer and another fluorine-containing monomer or an oxygen-containing monomer, and a content of the melting lowering agent contained in the binding material is from 1 to 50% by mass. The melting point lowering agent lowers one or more of a melting start temperature or a melting peak temperature of the binding material, which is measured by differential scanning calorimetry in accordance with JIS 7121 under coexistence with the non-aqueous electrolyte, as compared to a case of using only polyvinylidene fluoride .

### Advantageous Effects of Invention

In the lithium ion secondary battery of the invention, it is possible to suppress heat generation at the time of the internal short-circuit of the battery by forming the porous insulating layer between the electrode and the separator.

### BRIEF DESCRIPTION OF DRAWINGS

Fig. 1 is a cross-sectional view of an electrode layer according to an embodiment of the invention.
Fig. 2 is a cross-sectional view of an electrode layer according to another embodiment of the invention.

### DESCRIPTION OF EMBODIMENTS

Hereinafter, a lithium ion secondary battery of the invention is described. First, a structure of an electrode layer including a cathode and an anode constituting an electrode element, and a separator is described with reference to the drawings, and then respective constituent members of a battery are described in detail.

### [Configuration of Electrode Layer]

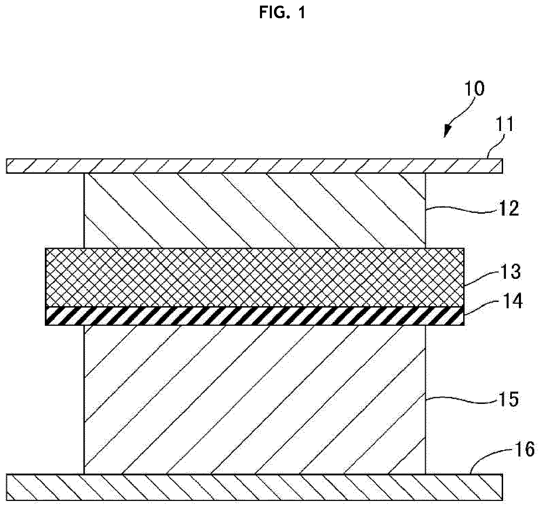

Fig. 1 is a cross-sectional view schematically showing an electrode layer of lithium ion secondary battery according to an embodiment of the invention. As shown in Fig. 1, an electrode layer 10 of the embodiment includes a cathode mixture layer 15 coated on one surface of a cathode current collector 16, a separator 13, and an anode mixture layer 12 coated on a surface of an anode current collector 11. In addition, a porous insulating layer 14 is formed between the separator 13 and the cathode mixture layer 15 so that a surface of the separator positioned on a side of the cathode mixture layer is covered.

The porous insulating layer 14 is formed of a binding material containing polyvinylidene fluoride (PVDF) as a binding component and a melting point lowering agent such as a copolymer of a vinylidene fluoride monomer and another fluorine-containing monomer or an oxygen-containing monomer (hereinafter, also referred to as a "PVDF copolymer"), and may optionally contain an inorganic oxide filler and/or a gas generating agent, if necessary. The porous insulating layer 14 bonds the separator 13 and the cathode mixture layer 15 to each other but does not inhibit permeation of lithium ions through the separator 13. However, in a case in which a temperature of the battery suddenly rises due to an internal short-circuit, the porous insulating layer 14 is melted at a melting temperature of the separator 13 or lower, such that at least a portion of the porous shape is closed and the permeation of lithium ions in an electrolytic solution is inhibited. A melting temperature of the binding material may be lower than the melting temperature of the separator, and it is preferable to start melting, for example, in a temperature range of approximately 70°C to approximately 100°C.

In order to reliably operate a pressure detection type current interrupt device (CID) (not shown), it is preferable that gas generation from the porous insulating layer 14 is promoted when exceeding a predetermined battery voltage (for example, in a case of an overcharged state of 4.5 V or more). In a case in which the porous insulating layer contains an inorganic oxide filler, a carbonate solvent is decomposed by the kind or physical properties (specific surface area or particle diameter) thereof during a high temperature storage and under a high voltage condition and gas may thus be generated. For example, when exceeding the predetermined battery voltage (for example, in a case of an overcharged state of 4.5 V or more), the inorganic filler contained in the porous insulating layer 14 decomposes a non-aqueous electrolytic solution (carbonic ester) and gas is thus generated. The gas generating compound is preferably hydrogen (H₂) and carbon dioxide.

In a further preferred embodiment, by adding a gas generating agent to the porous insulating layer 14, when exceeding the predetermined battery voltage (for example, in a case of an overcharged state of from 4.8 V to 5.0 V), the gas generating agent is decomposed and gas is thus generated. The gas generating agent is preferably a compound which generates carbon dioxide (CO₂). By adding the gas generating compound to the non-aqueous electrolytic solution, when exceeding the predetermined battery voltage (for example, in a case of an overcharged state of 4.5 V or more), the gas generating agent is decomposed and gas is thus generated. The gas generating compound is preferably hydrogen (H₂) and carbon dioxide.

A thickness of the porous insulating layer 14 may be enough that the permeation of lithium ions can be inhibited at the time of melting, and is, for example, from 0.1 µm to 10 µm and preferably 5 µm or less. At the thickness of less than 0.1 µm, the permeation of lithium ions may not be sufficiently inhibited at the time of abnormal heat generation, and a heat generation suppression function may not be certainly exhibited. In a case in which the thickness is greater than 10 µm, even the resistance at the normal time is high, resulting in deterioration of battery characteristics at a high rate. The thickness of the porous insulating layer 14 may be, for example, 0.1, 0.3, 0.5, 1, 2, 5, or 10 µm.

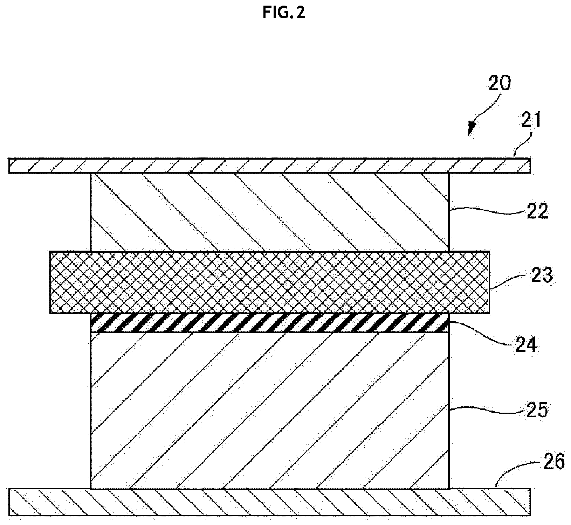

Fig. 2 is a cross-sectional view showing a configuration of an electrode layer 20 according to another embodiment. In the electrode layer 20 shown in Fig. 2, only a configuration in which a porous insulating layer 24 is interposed between a cathode mixture layer 25 and a separator 23 is different from the configuration shown in Fig. 1. That is, in the embodiment, the porous insulating layer 24 is formed so that a surface of the cathode mixture layer 25 in contact with the separator 23 is covered, but the other configurations are the same as the electrode layer shown in Fig. 1.

In another embodiment, the porous insulating layer may be formed between the separator and the anode mixture layer (not shown), but it is preferable that the porous insulating layer is present between the cathode mixture layer and the separator in terms of effectively suppressing the permeation of lithium ions at the time of the internal short-circuit. Since the porous insulating layer suppresses the permeation of lithium ions at the time of melting, and furthermore, when exceeding the predetermined battery voltage, the gas generating agent is decomposed and gas is thus generated, there is no need to contain a cathode active material; however, a conductive auxiliary agent and the like may be contained in a case in which the surface of the electrode is coated in order to improve battery characteristics during a normal operation. In the specification, a porous insulating layer provided on the surface of the cathode mixture layer may be referred to as an "overcoat layer".

Regarding a mechanism in which the binding material in the porous insulating layer is melted at the melting temperature of the separator or lower, it is considered based on the fact that a melting point of PVDF which is a main component of the binding material is lowered by containing the melting point lowering agent and/or the PVDF copolymer in the binding material.

Regarding a mechanism in which gas is generated from the porous insulating layer, it is considered based on the fact that, when exceeding the predetermined battery voltage, the gas generating agent is decomposed and gas is thus generated by containing the gas generating agent in the porous insulating layer.

Furthermore, it is considered based on the fact that, when exceeding the predetermined battery voltage, the carbonate solvent is decomposed and gas is thus generated by containing the inorganic filler in the porous insulating layer.

Hereinafter, respective components constituting the electrode layers (10 and 20) of Figs. 1 and 2 are described in order.

### [Separator]

Examples of a form of the separators 13 and 23 can include a microporous film, a porous flat plate, or a nonwoven formed of a resin such as polyethylene (PE), polypropylene (PP), polyester, cellulose, and polyamide. A preferred example includes a porous resin sheet having a single layer or multilayer structure and mainly formed of one or two or more kinds of polyolefin resin. A thickness of the separator can be, for example, from 15 µm to 30 µm. In a preferred embodiment, a separator, having a single layer or multilayer structure and including a porous resin layer (when a temperature reaches a predetermined temperature, a resin is melt and pores are clogged, such that a current is cut off) exhibiting the shut down function, is used.

### [Porous Insulating Layer]

Each of the porous insulating layers 14 and 24 is formed of a binding material containing polyvinylidene fluoride (PVDF) as a binding component and a melting point lowering agent. A melting start temperature and/or a melting peak temperature of the binding material measured by a differential scanning calorimetry under a coexistence with the non-aqueous electrolyte and the binding material is lowered as compared to a case of using only PVDF, such that the porous insulating layer is melted when the temperature of the battery rises and the permeation of lithium ions is inhibited.

The porous insulating layer promotes gas generation in order to promote an operation of a pressure detection type current interrupt device when exceeding a predetermined battery voltage (for example, in a case of an overcharged state of 4.5 V or more).

### (Binding Material)

The binding material contains polyvinylidene fluoride (PVDF) as a binding component and a melting point lowering agent. The binding component is required to have adhesion to current collect metal, which is achieved by the present of a polar group in the binding component. In addition, the binding component needs to have sufficient flexibility to handle an electrode, and to correspond to a dimensional variation of an active material during a charge and discharge cycle. The binding component needs to provide specific electrochemical properties and to be compatible with a non-aqueous electrolytic solution to be used.

Mechanical characteristics and electrochemical characteristics of PVDF are suitable for the several purposes required for the binding component. Although it is reported that a melting point of PVDF alone is approximately 180°C, it is considered that the melting point thereof is slightly lowered because it is in contact with a non-aqueous electrolyte in a non-aqueous electrolyte secondary battery. By containing the melting point lowering agent, the binding material of the embodiment is melted when the temperature of the non-aqueous electrolyte secondary battery rises, and a resistance of the conductive layer is increased, such that thermal runaway of the non-aqueous electrolyte secondary battery can be suppressed. From the viewpoint of suppressing thermal runaway, a melting start temperature of the binding material is preferably low, but in a case in which the melting start temperature is too low, a function of the binding material is inhibited, which is not preferable. Therefore, the melting start temperature of the binding material is preferably from approximately 50°C to approximately 150°C, more preferably from approximately 60°C to approximately 130°C, and still more preferably from approximately 70°C to approximately 100°C.

A melting peak temperature (melting point) of the binding material may be also lowered as the melting start temperature of the binding material is lowered. The melting peak temperature of the binding material is preferably from 70°C to 130°C under the measurement conditions. The melting peak temperature of the binding material is preferably 70°C or higher from the viewpoint of thermal stability. Meanwhile, the melting point of the binding material is preferably 130°C or lower from the viewpoint of stability. The melting point of the binding material is more preferably lower than 130°C, still more preferably 120°C or lower, and further still more preferably 110°C or lower.

In the embodiment, the "melting point lowering agent" and refers to a component which melts the porous insulating layer at a lower temperature than the separator by lowering the melting start temperature and/or the melting peak temperature of PVDF. It is considered that a gas generating function is promoted in the case in which the porous insulating layer contains the inorganic oxide filler or the gas generating agent. It is considered that alumina used as the inorganic oxide filler may promote oxidative decomposition of carbonate contained as an electrolytic solution, and furthermore, the oxidative decomposition is promoted in a case in which lithium carbonate and the like is used as the gas generating agent. These actions are exerted when the battery voltage exceeds a predetermined value (for example, in a case of an overcharged state of from 4.8 V to 5.0 V). However, since a potential of the cathode mixture layer is not uniformly distributed, differs in a thickness direction of the cathode mixture layer, and increases toward a surface thereof, the porous insulating layer of the embodiment can be positioned at an interface between the cathode mixture layer and the separator to quickly detect an increase in battery potential. Such a function is preferably exhibited by lowering the melting start temperature and/or the melting peak temperature of the binding material. Therefore, the melting start temperature and/or the melting peak temperature of the binding material of the embodiment is lower than that in case of using only normal PVDF.

Accordingly, the binding material of the embodiment may be selected from the one which lowers one or more of a melting start temperature or a melting peak temperature of the mixture of PVDF as a binding component and a melting point lowering agent, which is measured by differential scanning calorimetry under coexistence of a non-aqueous electrolyte, as compared to a case of using only PVDF, which is measured under the same conditions. In the embodiment, the melting start temperature means a temperature at which heat absorption to be analyzed by a differential scanning calorimetry (hereinafter, also referred to as DSC) rises from the baseline, and generally can be measured in accordance with JIS 7121 (a method of measuring plastic transition temperature). For more clarity, the melting start temperature may be a temperature at which 10%, about 20%, or about 50% of heat absorption of a top peak of a heat absorption peak is observed. Alternatively, a heat absorption amount due to melting of the binding material is calculated from a peak area of a DSC curve, and a temperature corresponding to approximately half of the total heat absorption amount may be taken as an index of the melting start temperature. This is because the heat absorption starts from a lower temperature since the melting start temperature of the binding material is decreased, and the binding material is melted when reaches a certain absorption amount.

### (Method of Measuring Melting Point and Melting Start Temperature)

For example, a device such as high sensitivity type differential scanning calorimeter DSC7000X manufactured by Hitachi High-Tech Science Corporation is used. PVDF and a melting point lowering agent are dissolved in an organic solvent or are mixed in a powder form as it is in a mortar or the like, approximately 5 mg of the dried powder is placed in an aluminum pan, and then a non-aqueous electrolyte is added to the aluminum pan, thereby obtaining a sample. The non-aqueous electrolyte added to the sample is preferably an electrolytic solution in which a lithium salt containing at least LiPF₆ as an electrolyte is dissolved in an organic solvent selected from cyclic carbonate or linear carbonate singly, or a solvent mixture in which a plurality of kinds thereof is combined. In the embodiment, a non-aqueous electrolyte obtained by dissolving 1 M of lithium hexafluorophosphate (LiPF₆) in a mixed solution in which a ratio of ethylene carbonate (EC) to ethyl methyl carbonate (EMC) is 3:7 is used. As the measurement conditions, for example, a temperature rises from room temperature to approximately 200°C at 5°C/min. It can be determined by the heat absorption curve obtained at this time.

The melting point lowering agent is a copolymer of a vinylidene fluoride monomer and another fluorine-containing monomer or an oxygen-containing monomer capable of lowering the melting start temperature and the melting peak temperature of PVDF used as the binding component. However, a compound having a compatibility (suitable) with PVDF which is a crystalline polymer can be used, and preferably a crystalline or amorphous polymer compound can be used for the material of the PTC function-imparting component. In the specification, the term "compatibility" refers to a state in which two different materials, in particular, polymers are uniformly mixed, and these materials may be completely compatible or may be partially compatible with each other. It is possible to determine as to whether the sample is uniformly mixed by confirming that the sample after mixing is transparent or has a film forming ability.

In general, it has been known that, in a case in which a crystalline polymer compound has compatibility with an amorphous polymer compound, a melting point of the crystalline polymer compound is lowered. The factor which has the greatest influence on the lowering of the melting point is a thermodynamic parameter χ₁₂ value representing strength of an interaction between both polymers, and is derived by Flory-Huggins theory. Based on the theory, it is considered that, in a compatible crystalline/amorphous polymer blend system, a melting point is lowered in a case in which the χ₁₂ value represents a negative value.

A content of the melting point lowering agent contained in the binding material is from 1 to 50 % by mass, more preferably from 2 to 40 % by mass, and still more preferably from 5 to 30 % by mass. In a case in which the content of the melting point lowering agent is less than 1 % by mass, the melting point lowering action of the binding component is small, and in a case in which the content of the PTC function-imparting component is more than 50 % by mass, a binding force of the binding material with the electrode active material may be deteriorated.

The binding material of the embodiment is preferably prepared as a mixture obtained by dissolving a polyvinylidene fluoride (PVDF) as a binding component and a melting point lowering agent and/or PVDF copolymer in a common solvent which dissolves both components, performing solvent substitution, and then precipitating the solvent. This is because the binding material prepared by this method exists in a state in which the binding component and the melting point lowering agent are uniformly mixed at a molecular level.

In another embodiment, a polyvinylidene fluoride (PVDF) and a melting point lowering agent may be mixed by a powder mixer such as a ball mill or a rocking mixer or a known crusher to prepare a powdery mixture. This is because the powdery mixture is easily uniformed in a solvent and used as a binding material when preparing an electrolytic solution or an electrode mixture layer.

### (PVDF Copolymer)

The melting point lowering agent may be a copolymer of a vinylidene fluoride monomer and another fluorine-containing monomer or an oxygen-containing monomer. Examples of the other fluorine-containing monomer include vinyl fluoride, 3-fluoropropylene, and fluoroalkyl vinyl ether, and an example of the oxygen-containing monomer includes ethylene glycol. The PTC function-imparting component is preferably a poly(vinylidene fluoride-hexafluoropropylene) (PVDF-HFP) or a poly(vinylidene fluoride-oxyethylene) (PVDF-PEO). In a case in which the melting point lowering agent is a copolymer thereof, a content of the copolymer contained in the binding material is preferably more than 50 % by mass, and is preferably from 1 to 75 % by mass.

Alternatively, in another embodiment, a polyvinylidene fluoride (PVDF) copolymer containing PVDF which is a binding component and a melting point lowering agent in a molecule may be used as a binding material. In this case, it is preferable that one or more of a melting start temperature or a melting peak temperature of the PVDF copolymer, under coexistence of a non-aqueous electrolyte, is lowered as compared to a case of using only the PVDF which is a homopolymer of vinylidene fluoride. For example, the melting start temperature and/or the melting peak temperature of the PVDF copolymer is preferably from 45°C to 110°C, and more preferably from 50°C to 100°C. As such a PVDF copolymer, PVDF-HFP (hexafluoropropylene), PVDF-PEO (poly(ethylene oxide)), and the like can be used.

The melting start temperature and/or the melting peak temperature can be adjusted to a desired temperature by mixing polyvinylidene fluoride (PVDF) and a PVDF copolymer.

### (Inorganic Oxide Filler)

The porous insulating layer further preferably contains an inorganic oxide filler. As the inorganic oxide filler, aluminum oxide (α-Al₂O₃ or γ-Al₂O₃), aluminum hydroxide (Al(OH)₃), boehmite (AlOOH), magnesia (magnesium oxide: MgO), magnesium hydroxide (Mg(OH)₂), zirconia (ZrO₂), titania (TiO₂), silica (SiO₂), silicon dioxide (SiO₂), silicon carbide (SiC), aluminum nitride (A1N), boron nitride (BN), or the like is used. These materials may be used singly, or a mixture of two or more kinds thereof. The shape of the inorganic oxide filler is not limited, and various shapes such as a spherical shape, a needle shape, an elliptical shape, a plate shape, and a scale-like shape can be used. In addition, an average particle diameter of the inorganic oxide fillers is not particularly limited, and is preferably from 0.01 to 5 µm. In the specification, the term "average particle diameter", unless otherwise specified, refers to a particle diameter (a D₅₀ particle diameter or a median diameter) corresponding to 50 volume% of a cumulative volume from a fine particle side in a particle diameter distribution on the basis of volume measured by a particle diameter distribution measuring device based on a general laser diffraction and scattering method.

A content of the inorganic oxide filler in the porous insulating layer is from 0 to 99 % by mass and preferably about from 80 to 90 % by mass. The case in which a large amount of inorganic oxide filler is added contributes heat resistance of the separator. In a case in which the amount of inorganic oxide filler as small as possible, the porous insulating layer is in close contact with the separator and the binding material is melted at the time of the internal short-circuit, which contributes to the improvement of safety. By selecting the kind or physical properties of the inorganic oxide filler, the electrolytic solution is decomposed at the time of overcharging of the battery and gas can thus be generated.

### (Gas Generating Agent)

The gas generating agent in the embodiment is not limited as long as it is a compound which can generate gas by being decomposed when exceeding the predetermined battery voltage (for example, in a case of an overcharged state of from 4.8 to 5.0 V). Preferably, as the compound which generates gas by being decomposed, at least one selected from the group consisting of lithium carbonate (Li₂CO₃), lithium hydrogencarbonate (LiHCO₃), sodium carbonate, potassium carbonate, magnesium carbonate, calcium carbonate, sodium hydrogencarbonate, potassium hydrogencarbonate, magnesium hydrogencarbonate, calcium hydrogencarbonate, 4,4'-oxybis(benzenesulfonylhydrazide) (OBSH), and azodicarbonamide (ADCA) can be used. A content of the gas generating agent in the porous insulating layer is from 0 to 10 % by mass and preferably about from 0.5 to 5 % by mass. In a case in which both the inorganic oxide filler and the gas generating agent are contained in the porous insulating layer, a content ratio of the gas generating agent to the inorganic oxide filler is preferably from 90:10 to 99:1.

An example of a method of producing a porous insulating layer can include a production method in which a surface of the electrode mixture layer or the separator is coated with slurry obtained by dissolving or dispersing the binding material and an inorganic oxide filler and a gas generating agent, if desired, in water, an aprotic polar solvent represented by N-methyl pyrrolidone, dimethyl sulfoxide, propylene carbonate, dimethyl formamide, or γ-butyrolactone, or a mixed liquid thereof, and drying is performed. By performing the drying after the slurry coating, the dispersion solvent (water or organic solvent) is volatilized and an opened-porous layer is formed. In this case, a size of a pore can be large by adding a small amount of inorganic oxide filler.

In a case in which an aqueous binding material (for example, an aqueous dispersion PVDF, an aqueous dispersion PMMA, or the like) is used, cyclohexylbenzene (CHB) or biphenyl (BP) which is insoluble or hardly soluble in water can be mixed with lithium carbonate as a gas generating agent. Also, in this case, the pores are opened when the solvent is volatilized and the porous layer can be formed. Since the CHB or BP mixed in the porous layer is eluted in a case in which it is in contact with a carbonate-based electrolytic solution, this exerts the same action as in the case of adding the gas generating agent to the electrolytic solution.

The size and amount of the pore can be adjusted by a slurry solid concentration or a drying rate. Preferably, the surface of the cathode mixture layer is coated with slurry in which an inorganic oxide filler, a gas generating agent, and a binding material are mixed at a ratio of from 76:4:20 to 94:5:1 and drying is performed, a porous insulating layer is formed on the surface of the cathode mixture layer, and then the porous insulating layer is compressed by a roll press to have a predetermined thickness.

### (Cathode Active Material)

The cathode active material is not particularly limited as long as it is a material capable of charging and discharging lithium and may be a cathode active material usually used in a lithium ion secondary battery. Specifically, in addition to the oxide in which lithium (Li) and nickel (Ni) are contained as the constituent metal elements, the oxide encompasses an oxide containing at least one metal element (that is, transition metal element and/or typical metal element other than Li and Ni) other than lithium and nickel as a constituent metal element in an amount of equal to nickel or less than nickel based on the number of atoms. The metal element other than Li and Ni may be, for example, one or two or more metal elements selected from the group consisting of Co, Mn, Al, Cr, Fe, V, Mg, Ca, Na, Ti, Zr, Nb, Mo, W, Cu, Zn, Ga, In, Sn, La, and Ce. These cathode active materials may be used singly, or in combination of two or more kinds thereof.

In a preferred embodiment, an example of the cathode active material includes lithium-nickel-cobalt-aluminum-based oxide (NCA) represented by General Formula (1): LiₜNi_{1-x-y}CoₓAl_{y}O₂ (wherein 0.95 ≤ t ≤ 1.15, 0 ≤ x ≤ 0.3, 0.1 ≤ y ≤ 0.2, and x + y < 0.5). A specific example of NCA includes LiNi_{0.8}Co_{0.15}Al_{0.05}O₂.

In another preferred embodiment, an example of the cathode active material includes lithium-nickel-cobalt-manganese-based oxide (NCM) represented by General Formula (2): LiNiₐCo_{b}Mn_{c}O₂ (wherein 0 < a < 1, 0 < b < 1, 0 < c < 1, and a + b + c = 1). NCM has a high energy density per volume unit and has excellent thermal stability.

A content of the cathode active material in the electrode mixture layer is usually 10 % by mass or more, preferably 30 % by mass or more, more preferably 50 % by mass or more, and particularly preferably 70 % by mass or more. In addition, the content of the cathode active material in the electrode mixture layer is usually 99.9 % by mass or less and preferably 99 % by mass or less.

### (Anode Active Material)

Examples of the anode active material can include at least one selected from metal lithium, a lithium-containing alloy, a metal or alloy capable of alloying with lithium, an oxide capable of doping and dedoping of lithium ions, a transition metal nitride capable of doping and dedoping of lithium ions, and a carbon material capable of doping and dedoping of lithium ions (these may be used singly, or may be used a mixture including two or more kinds thereof).

Examples of the metal or alloy capable of alloying with lithium (or lithium ions) include silicon, a silicon alloy, tin, and tin alloy. In addition, the anode active material may also be lithium titanate.

Among them, the carbon material capable of doping and dedoping of lithium ions is preferable. Examples of such a carbon material include carbon black, activated carbon, a graphite material (artificial graphite or natural graphite), and an amorphous carbon material. The form of the carbon material may be any of a fibrous form, a spherical form, a potato form, and a flake form.

Specific examples of the amorphous carbon material include hard carbon, coke, a mesocarbon microbead (MCMB) calcined at 1500°C or lower, and a mesophase pitch carbon fiber (MCF).

Examples of the graphite material include natural graphite and artificial graphite. Graphitized MCMB and graphitized MCF are used as the artificial graphite. In addition, a compound containing boron can be used as the graphite material. Furthermore, a graphite material coated with a metal such as gold, platinum, silver, copper, or tin, a graphite material coated with an amorphous carbon, and a mixture of amorphous carbon and graphite can also be used as the graphite material.

These carbon materials may be used singly, or a mixture of two or more kinds thereof.

### (Conductive Auxiliary Agent)

The electrode mixture layer preferably contains a conductive auxiliary agent. An example of the conductive auxiliary agent used in the invention can include a known conductive auxiliary agent. The known conductive auxiliary agent is not particularly limited as long as it is a carbon material having conductivity, but graphite, carbon black, a conductive carbon fiber (carbon nanotube, carbon nanofiber, or carbon fiber), and fullerene can be used singly, or in combination of two or more kinds thereof. Examples of commercially available carbon black include, but are not limited to, TOKABLACK #4300, #4400, #4500, #5500, or the like (furnace black, manufactured by Tokai Carbon Co., Ltd.), Printex L or the like (furnace black, manufactured by Degussa AG), Raven 7000, 5750, 5250, 5000 ULTRAIII, 5000 ULTRA, or the like, Conductex SC ULTRA, Conductex 975 ULTRA, or the like, PUER BLACK 100, 115, 205, or the like (furnace black, manufactured by Columbian Chemicals Company), #2350, #2400B, #2600B, #30050B, #3030B, #3230B, #3350B, #3400B, #5400B, or the like (furnace black, manufactured by Mitsubishi Chemical Corporation), MONARCH 1400, 1300, 900, Vulcan XC-72R, Black Pearls 2000, LITX-50, LITX-200, or the like (furnace black, manufactured by Cabot Corporation), Ensaco 250G, Ensaco 260G, Ensaco 350G, or Super P-Li (manufactured by TIMCAL Japan), Ketjen Black EC-300J or EC-600JD (manufactured by Akzo Nobel), and Denka Black, Denka Black HS-100 or FX-35 (acetylene black, manufactured by Denka Company Limited), or the like. Examples of graphite include artificial graphite or natural graphite such as scaly graphite, lump graphite, and earthy graphite, but are not limited thereto. However, the carbon material is not limited thereto, and a conventionally known material used as an anode active material for a lithium ion secondary battery can be used. These anode active materials may be used singly, or in combination of two or more kinds thereof. A content of the conductive auxiliary agent contained in the electrode mixture layer is preferably 1 % by mass or more, and is preferably, for example, about from 1 to 10 % by mass.

### [Current Collector]

The current collector according to an embodiment of the invention can be formed of various materials, but usually can be formed of a metal or an alloy. In Fig. 1 and Fig. 2, examples of a current collector for a cathode (16 or 26) include aluminum, nickel, or SUS, and examples of a current collector for an anode (11 or 21) include copper, nickel, or SUS. Among them, aluminum or copper is preferable in terms of a balance between the high conductivity and the cost. Aluminum refers to aluminum and an aluminum alloy, and copper refers to pure copper and a copper alloy. In the embodiment, an aluminum foil can be used for a cathode of a secondary battery and an anode for a secondary battery, and a copper foil can be used for an anode for a secondary battery. A material of the aluminum foil is not particularly limited, but pure aluminum such as A1085, or A3003 can be used. In addition, a material of the copper foil is also not particularly limited, but a rolled copper foil or an electrolytic copper foil is preferably used.

### (Method of Forming Electrode Layer)

An electrode layer including the electrode for a lithium ion secondary battery of the embodiment may be produced by coating an electrode mixture slurry containing the above-mentioned electrode active material and conductive auxiliary agent, and a binding agent on a surface of the current collector and performing drying. Examples of a material of the binding agent for binding the electrode active material can include a fluororesin represented by PVDF, a polysaccharide polymer, and styrene butadiene rubber (SBR), but are not limited thereto. In addition, a binding material contained in the porous insulating layer can be used. In this case, an electrode mixture slurry in which the electrode active material and the conductive auxiliary agent are dispersed in a solvent obtained by dissolving the above-mentioned binding material in a solvent is preferably formed.

The solvent contained in the mixture slurry is also commonly used with the common solvent when preparing the binding material, and an aprotic polar solvent represented by N-methyl pyrrolidone, dimethyl sulfoxide, propylene carbonate, dimethyl formamide, and γ-butyrolactone or a mixed liquid thereof can be selected.

A method of coating a mixture slurry onto the current collector and drying the mixed slurry is not particularly limited. Examples of the method include a slot-die coating method, a slide coating method, a curtain coating method, and a gravure coating method. Examples of the drying method include drying using warm air, hot air, or low-humidity air, vacuum drying, and drying using (far) infrared rays. Drying time and drying temperature are not particularly limited, but the drying time is usually from 1 minute to 30 minutes, and the drying temperature is usually from 40°C to 180°C.

It is preferable that a method of producing the mixture layer includes a step of coating the mixture slurry onto the current collector and drying the mixture slurry, and then performing a pressure treatment to reduce porosity of the active material layer by using a mold press or a roll press.

### [Electrolytic Solution]

The electrolytic solution is preferably an electrolytic solution usually used on the lithium ion secondary battery, and more specifically, has the form in which a supporting salt (lithium salt) is dissolved in an organic solvent. Examples of the lithium salt include at least one lithium salt selected from an inorganic acid anionic salt such as lithium hexafluorophosphate (LiPF₆), lithium tetrafluoroborate (LiBF₄), lithium perchlorate (LiClO₄), lithium hexafluoroarsenate (LiAsF₆), lithium hexafluorotantalate (LiTaF₆), lithium tetrachloroaluminate (LiAlCl₄), and lithium decachlorodecaborate (Li₂B₁₀Cl₁₀), and an organic acid anionic salt such as lithium trifluoromethanesulphonate (LiCF₃SO₃), lithium bis(trifluoromethanesulphonyl)imide (Li(CF₃SO₂)₂N), and lithium bis(pentafluoroethanesulfonyl)imide (Li(C₂F₅SO₂)₂N). Among them, lithium hexafluorophosphate (LiPF₆) is preferable.

In addition, examples of the organic solvent include at least one organic solvent selected from the group consisting of cyclic carbonate, fluorine-containing cyclic carbonate, linear carbonate, fluorine-containing linear carbonate, aliphatic carboxylate ester, fluorine-containing aliphatic carboxylate ester, γ-lactone, fluorine-containing γ-butyrolactone, cyclic ether, fluorine-containing cyclic ether, chain ether, and fluorine-containing chain ether.

Examples of the cyclic carbonate include propylene carbonate (PC), ethylene carbonate (EC), and butylene carbonate (BC). Examples of the fluorine-containing cyclic carbonate can include fluoroethylene carbonate (FEC). Examples of the linear carbonate include dimethyl carbonate (DMC), diethyl carbonate (DEC), ethyl methyl carbonate (EMC), methyl propyl carbonate (MPC), ethyl propyl carbonate (EPC), and dipropyl carbonate (DPC). Examples of the aliphatic carboxylate ester include methyl formate, methyl acetate, and ethyl propionate. Examples of the γ-lactone include γ-butyrolactone. Examples of the cyclic ether include tetrahydrofuran, 2-methyltetrahydrofuran, and 1,4-dioxane. Examples of the chain ether include 1,2-ethoxyethane (DEE), ethoxymethoxyethane (EME), diethyl ether, 1,2-dimethoxyethane, and 1,2-dibutoxyethane. Other examples include nitrile such as acetonitrile and amide such as dimethylformamide. These organic solvents may be used singly, or in combination of two or more kinds thereof.

### (Gas Generating Compound)

A gas generating compound can be further contained in the electrolytic solution. The gas generating compound may be directly added to the electrolytic solution or may be eluted from the porous insulating layer into the electrolytic solution in the battery. The gas generating compound contained in the electrolytic solution is a compound which is decomposed to obtain gas generation when exceeding the predetermined battery voltage (for example, in a case of an overcharged state of 4.5 V or more). The gas generating compound is preferably a compound which generates hydrogen, and can be a compound in which at least one selected from the group consisting of a cycloalkyl benzene compound (for example, cyclohexylbenzene (CHB)), an alkylbenzene compound, a biphenyl compound (for example, biphenyl (BP)), and an alkylbiphenyl compound is added. The amount of gas generating compound added to the electrolytic solution is not particularly limited as long as a predetermined amount of gas is generated under predetermined conditions, and is, for example, approximately from 0.05 to 5.0 % by mass and preferably from 0.1 to 4.0 % by mass.

### [Action and Effect]

In the lithium ion secondary battery of the embodiment, the binding material in the porous insulating layer formed between the electrode and the separator is melted and the permeation of lithium ions is thus inhibited in response to an instantaneous temperature rise at the time of the internal short-circuit, such that an action and effect of suppressing the heat generation at the time of the internal short-circuit of the battery is exhibited. In the preferred embodiment, gas such as hydrogen (H₂) and carbon dioxide (CO₂) is generated from the porous insulating layer formed between the electrode and the separator in response to a gentle temperature rise at the time of overcharging, such that an operation of a pressure detection type current interrupt device (CID) is advantageously promoted.

### Examples

In the lithium ion secondary battery according to the invention, it is considered that a heat generation suppression action which exerts at the time of the internal short-circuit is caused by a melting point lowering action of the melting point lowering agent contained in the porous insulating layer. Hereinafter, typical specific examples are described.

### [Melting Point Measurement of Binding Material Under Non-Aqueous Electrolyte Coexistence by DSC]

### <Melting Point Lowering Agent List>

Lists of compounds used as the melting point lowering agent are shown in Table 1 below.

**[Table 1]**

| Manufacturer | Product Name | | Feature |
|---|---|---|---|
| ARKEMA | PVDF-HFP | 2851 | Low HFP content |
| | | 2801 | Medium HFP content |
| | | 2751 | High HFP content |

### <Sample Preparation>

PVDF and various melting point lowering agents (powder) were mixed at a predetermined ratio using an agate mortar for approximately 15 minutes. For example, in a case in which a mixing ratio of the PVDF (powder) to the melting point lowering agent (powder) is 1 : 1, 0.1 g of the PVDF and the PTC function-imparting component each were weighed and mixed. The mixed powder was vacuum-dried at room temperature (25°C) for 10 hours or longer. 3 mg of the sample was weighed and placed into a SUS-PAN for DSC measurement which was weighed in advance. Subsequently, 6 mg of an electrolytic solution (1M-LiPF₆/3EC7EMC) was added to the SUS-PAN (a mass ratio of powder to electrolytic solution is 1 : 2). At this time, a state in which the powder was almost dipped in the solution was visually confirmed, and a lid (weighed in advance) was quickly set (weighed) and then hermetic sealing was performed with a dedicated press.

### <Measurement>

The melting temperature was measured under conditions of a scanning speed of 5°C/min and a temperature from room temperature to 210°C using a high-sensitivity differential scanning calorimeter DSC7000X device manufactured by Hitachi High-Tech Science Corporation.

### <Results>

Table 2 shows manufacturer names and product names of PVDF and the melting temperature of PVDF alone.

**[Table 2]**

| Manufacturer | Product Number | % by mass | Melting Temperature | |
|---|---|---|---|---|
| | | | Start Temperature °C | Peak Temperature °C |
| KUREHA | W#7200 | 100 | 95 | 138 |
| | W#7300 | 100 | 90 | 128 |
| | W#9300 | 100 | 88 | 130 |
| ARKEMA | KYNAR 711 | 100 | 92 | 100 |
| | KYNAR 761 | 100 | 87 | 95 |
| | HSV 900 | 100 | 80 | 95 |
| Solvay | Solef 5130 | 100 | 90 | 140 |

Table 3 shows the melting start temperature and the melting peak temperature (melting point) when 75 % by mass of the binding component (PVDF) and 25 % by mass of the melting point lowering agent and 50 % by mass of the binding component (PVDF) and 50 % by mass of the melting point lowering agent were mixed, respectively.

**[Table 3-1]**

| Binding Material | | | | Melting Point | |
|---|---|---|---|---|---|
| PVDF | % | [X] | % | Start Temp. deg. C | Peak Temp. deg. C |
| 7200 manufactured by KUREHA | 50 | PVDF-HFP (2851) | 50 | 72 | 108 |
| | 50 | PVDF-HFP (2801) | 50 | 72 | 110 |
| | 50 | PVDF-HFP (2751) | 50 | 74 | 112 |
| 7300 manufactured by KUREHA | 50 | PVDF-HFP (2851) | 50 | 70 | 106 |
| | 50 | PVDF-HFP (2801) | 50 | 70 | 108 |
| | 75 | PVDF-HFP (2751) | 25 | 72 | 110 |
| 9300 manufactured by KUREHA | 50 | PVDF-HFP(2851) | 50 | 69 | 103 |
| | 50 | PVDF-HFP(2801) | 50 | 69 | 105 |
| | 75 | PVDF-HFP(2751) | 25 | 71 | 107 |
| 9700 manufactured by KUREHA | 50 | PVDF-HFP(2851) | 50 | 48 | 105 |
| | 50 | PVDF-HFP(2801) | 50 | 46 | 103 |
| | 75 | PVDF-HFP(2751) | 25 | 52 | 106 |

**[Table 3-2]**

| Binding Material | | | | Melting Point | |
|---|---|---|---|---|---|
| PVDF | % | [X] | % | Start Temp. deg. C | Peak Temp. deg. C |
| ARKEMA KYNAR761 | 50 | PVDF-HFP (2851) | 50 | 71 | 88 |
| | 75 | PVDF-HFP (2751) | 25 | 73 | 89 |
| ARKEMA KYNAR711 | 50 | PVDF-HFP (2851) | 50 | 81 | 101 |
| | 75 | PVDF-HFP (2751) | 25 | 81 | 100 |
| HSV-900 | 50 | PVDF-HFP (2851) | 50 | 77 | 98 |
| | 75 | PVDF-HFP (2751) | 25 | 77 | 100 |
| Solef 5130 | 50 | PVDF-HFP (2851) | 50 | 85 | 125 |
| | 75 | PVDF-HFP (2751) | 25 | 87 | 128 |

As shown in Table 2 and Table 3, it was found that the mixture of PVDF and the melting point lowering agent started to melt from approximately 70°C and the peak temperature thereof was around from 90°C to 130°C.

### [Reference Example 1]

### Cathode Production

### 1. Slurry Preparation for Cathode Mixture Layer

A 5 L planetary disperser was used for the slurry preparation.

920 g of NCM 523 (composition formula: LiNi_{0.5}Co_{0.2}Mno.₃O₂, manufactured by Umicore S.A.), 20 g of Super-P (conductive carbon, manufactured by TIMCAL Japan), and 20 g of KS-6 (scale-like graphite, manufactured by TIMREX) were mixed for 10 minutes, and then 100 g of N-methyl pyrrolidone (NMP) was further added and mixing was performed for 20 minutes.

Next, 200 g of an 8%-PVDF solution (PVDF W#7200, manufactured by KUREHA CORPORATION is dissolved in NMP) was added and kneading was performed for 30 minutes, and 200 g of an 8%-PVDF solution was further added and kneading was performed for 30 minutes. Next, 100 g of an 8%-PVDF solution was added and kneading was performed for 30 minutes. Thereafter, 52 g of NMP was added for adjusting a viscosity and mixing was performed for 30 minutes, and then vacuum defoaming was performed for 30 minutes. Slurry having 62% solid content concentration was thus prepared. In the composition of the thus produced cathode, a mass ratio of NCM523:Super-P:KS-6:PVDF is 92:2:2:4.

### 2. Coating and Drying

A die coater was used for coating the slurry. One surface of an aluminum foil (thickness of 20 µm, width of 200 mm) was coated with the slurry and dried so that a coating weight after drying was 19.0 mg/cm². Next, the opposite surface (uncoated surface) of the aluminum foil was coated with the slurry and dried so that, similarly, the coating weight was 19.0 mg/cm². A cathode was produced by performing coating (38.0 mg/cm²) on the thus-obtained both surfaces (CA-1).

### 3. Slurry Preparation for Overcoat Layer

A 5 L planetary disperser was used for the slurry preparation.

540 g of N-methyl pyrrolidone (NMP) was added to 860 g of lithium carbonate, 100 g of Super-P (conductive carbon, manufactured by TIMCAL Japan), 250 g of an 8%-PVDF solution (manufactured by KUREHA CORPORATION, PVDF W#7200 is dissolved in NMP), and 20 g of polymethyl methacrylate (PMMA), and then mixing was performed for 30 minutes.

Next, 1,125 g of NMP was further added and mixing was performed for 60 minutes, and then vacuum defoaming was performed for 30 minutes, thereby preparing slurry having 32% solid content concentration.

### 4. Coating and Drying

Similarly to the cathode mixture layer, a die coater was used for slurry coating. One surface of an aluminum foil (thickness of 20 µm, width of 200 mm) coated with the cathode mixture layer was coated with the slurry and dried so that a coating weight after drying was 2.0 mg/cm². In addition, the other surface was also coated and dried. A cathode CB-1R coated with the overcoat layer (OC-1R) was obtained.

### 5. Press

A 35 tons press machine was used. A gap between an upper roller and a lower roller was adjusted, and the cathode was compressed so that a press density was to be 2.95 ± 0.05 g/cm³.

### 6. Slit

The electrode was slit to produce a cathode C-1 so that the cathode had an electrode distribution area (front surface: 56 mm x 334 mm, back surface: 56 mm x 408 mm) and a tab welding margin.

### Anode Production

### 1. Slurry Preparation

A 5 L planetary disperser was used for the slurry preparation.

930 g of natural graphite and 10 g of Super-P were mixed for 10 minutes, and then 500 g of NMP was added and mixing was performed for 20 minutes. Next, 500 g of an 8%-PVDF solution (PVDF is dissolved in NMP) was added and kneaded for 30 minutes, and 250 g of an 8%-PVDF solution was further added and kneaded for 30 minutes. Thereafter, 32 g of NMP was added for adjusting a viscosity and mixed for 30 minutes, and then vacuum defoaming was performed for 30 minutes. Slurry having 45% solid content concentration was thus prepared. In the composition of the thus produced anode, a mass ratio of natural graphite: Super-P:PVDF is 93:1:6.

### 2. Coating and Drying

A die coater was used for coating the slurry.

The slurry was coated on one surface of the copper foil (thickness of 10 µm) and dried so that the coating weight after drying was to be 11.0 mg/cm². Next, the slurry was coated on the opposite surface (uncoated surface) of the copper foil and dried so that, similarly, the coating weight was to be 11.0 mg/cm². The thus-obtained anode roll having the coated both surfaces (22.0 mg/cm²) was dried in a vacuum drying oven at 120° C for 12 hours.

### 3. Press

A small-sized press machine was used.

A gap between an upper roller and a lower roller was adjusted, and the anode was compressed so that a press density was to be 1.45 ± 0.05 g/cm³.

### 4. Slit

The electrode was slit to produce the anode A-1 having an electrode distribution area (front surface: 58 mm x 372 mm, back surface: 58 mm x 431 mm) and a tab welding margin.

### [Example 1]

A cathode and an anode were produced in the same manner as in Reference Example 1 except for the slurry preparation for the overcoat layer. The slurry for the overcoat layer was prepared by adding 250 g of an 8%-PVDF-HFP solution (manufactured by ARKEMA, FLEX2751 is dissolved in NMP) instead of PMMA used in Reference Example 1 to prepare slurry for an overcoat layer (OC-2), and then coating and drying was performed by the same method as in Example 1, thereby a cathode CB-1 coated with the overcoat layer (OC-1).

### [Example 2]

A cathode and an anode were produced in accordance with Reference Example 1 except for the slurry preparation of the overcoat layer. 5 L planetary disperser was used for the slurry preparation for the overcoat layer. 540 g of N-methyl pyrrolidone (NMP) was added to 430 g of α-alumina (Al₂O₃) having a particle diameter of 2 µm and a specific surface area of 2 m²/g, 430 g of lithium carbonate, 100 g of Super-P (conductive carbon, manufactured by TIMCAL Japan), 250 g of an 8%-PVDF solution (manufactured by KUREHA CORPORATION, PVDF W#7200 is dissolved in NMP), and 250 g of an 8%-PVDF-HFP solution (manufactured by ARKEMA, FLEX2751 is dissolved in NMP), and then mixing was performed for 30 minutes. Next, 1,125 g of N-methyl pyrrolidone (NMP) was further added and mixing was performed for 60 minutes, and then vacuum defoaming was performed for 30 minutes, thereby preparing slurry (OC-2) having 32% solid content concentration.

Similarly to Reference Example 1, a die coater was used for slurry coating. One surface of an aluminum foil (thickness of 20 µm, width of 200 mm) coated with the cathode mixture layer was coated with the slurry and dried so that a coating weight after drying was 2.0 mg/cm². In addition, the other surface was also coated and dried. A cathode CB-2 coated with the overcoat layer (OC-2) was obtained.

### [Sample Production]

An aluminum tab was bonded to a margin portion of a cathode for a test (one surface coating, electrode surface of 30 mm x 30 mm) which is obtained by applying various specifications of the overcoat layer of Table 5 to the cathode (C-1) made in accordance with a cathode specification shown in Table 4 by using an ultrasonic bonding machine (CK1). A nickel tab was bonded to a Cu foil of 2.8 cm x 2.8 cm of an anode for a test to which an anode specification (A-1) of Table 4 was applied by using an ultrasonic bonding machine (AK1). AK1 was brought into contact with the applied surface of CK1 with a PE separator interposed therebetween and was sandwiched by a laminate of 5 cm x 5 cm, and then three sides thereof were heat-sealed. Before pouring an electrolytic solution, the obtained product was reduced-dried with a vacuum drier at 70°C for 12 hours. 300 µL of an electrolytic solution (1mol-LiPF₆, EC/DEC = 3/7 (vol. ratio) was poured and then heat-sealed while being evacuated (K1).

**[Table 4]**

| Cathode Specification | | | | | | | | | | | |
|---|---|---|---|---|---|---|---|---|---|---|---|
| Cathode | Cathode Active Material | | Cathode Composition | | | | | | | | |
| | | | Active Material % | | Super-P % | | KS6 % | | PVDF 7200 % | | One Surface Coating Amount mg/cm² |
| C-1 | NCM523 | | 92.0 | | 2.0 | | 2.0 | | 4.0 | | 19.0 |

| Anode Specification | | | | | | | | | | | |
|---|---|---|---|---|---|---|---|---|---|---|---|
| Anode | | Anode Active Material | | Anode Composition | | | | | | | |
| | | | | Active Material % | | Super-P % | | PVDF % | | One Surface Coating Amount mg/cm² | |
| A-1 | | Natural Graphite | | 93.0 | | 1.0 | | 6.0 | | 11.0 | |

**[Table 5]**

| Overcoat Layer Specification | | | | | | | | |
|---|---|---|---|---|---|---|---|---|
| | Inorganic Filler | | Gas Generating Agent | | Binder | | Conductive Auxiliary Agent Super-p % | One Surface Coating Amount mg/cm² |
| | 1 | 2 | 1 | 2 | 1 | 2 | | |
| | % | % | % | % | % | % | | |
| OC-1R | α-Al₂O₃ | - | Lithium Carbonate | - | PVDF | PMMA | 10.0 | 2.0 |
| | 0.0 | - | 86.0 | - | 2.0 | 2.0 | | |
| OC-1 | α-Al₂O₃ | - | Lithium Carbonate | - | PVDF | PVDF-HFP | 10.0 | 2.0 |
| | 0.0 | - | 86.0 | - | 2.0 | 2.0 | | |
| OC-2 | α-Al₂O₃ | - | Lithium Carbonate | - | PVDF | PVDF-HFP | 10.0 | 2.0 |
| | 43.0 | - | 43.0 | - | 2.0 | 2.0 | | |
| OC-3 | α-Al₂O₃ | | Lithium Carbonate | CHB | PVDF | PVDF-HFP | 10.0 | 2.0 |
| | 43.00 | | 21.5 | 21.5 | 2.0 | 2.0 | | |
| OC-4 | α-Al₂O₃ | | Lithium Carbonate | BP | PVDF | PVDF-HFP | 10.0 | 2.0 |
| | 43.00 | | 21.5 | 21.5 | 2.0 | 2.0 | | |
| OC-5 | α-Al₂O₃ | - | Calcium Carbonate | - | PVDF | PVDF-HFP | 10.0 | 2.0 |
| | 0.0 | - | 86.0 | - | 2.0 | 2.0 | | |
| OC-6 | α-Al₂O₃ | - | Magnesium Carbonate | - | PVDF | PVDF-HFP | 10.0 | 2.0 |
| | (α-Al₂O₃ | - | 86.0 | - | 2.0 | 2.0 | | |
| OC-7 | α-Al₂O₃ | - | Microcapsule | - | PVDF | PVDF-HFP | 10.0 | 2.0 |
| | 0.0 | - | 86.0 | - | 2.0 | 2.0 | | |
| OC-8 | α-Al₂O₃ | - | OBSH | - | PVDF | PVDF-HFP | 10.0 | 2.0 |
| | 43.0 | - | 43.0 | - | 2.0 | 2.0 | | |
| OC-9 | α-Al₂O₃ | - | ADCA | - | PVDF | PVDF-HFP | 10.0 | 2.0 |
| | 43.0 | - | 43.0 | - | 2.0 | 2.0 | | |
| OC-10 | α-Al₂O₃ | - | Lithium Carbonate | - | PVDF-HFP | - | 10.0 | 2.0 |
| | 0.0 | - | 86.0 | - | 4.0 | - | | |
| OC-2R | - | - | - | - | - | - | - | 0.0 |
| | - | - | - | - | - | - | | |

### [Heat Resistance Measurement]

The produced sample cell (K1) was sandwiched by a heat block at a restrictive pressure of 0.2 kgf/cm², and the measurement condition was set to raise the temperature from room temperature to approximately 200°C at 5°C/min. At this time, an alternating resistance value (Ω) can be obtained at respective frequencies (for example, 1 kHz, 10 kHz, and 100 kHz). An example of the result is shown below. Table 6 shows values of resistance increasing start temperatures and maximum resistance values measured for the samples. In addition, Reference Example 2 shows a test result of using a cathode which does not have an overcoat layer.

**[Table 6]**

| Heat Resistance Measurement Test Results | | | | | |
|---|---|---|---|---|---|
| | Cathode | Cathode OC Layer | Anode | Resistance Increasing Start Temperature °C | Maximum Resistance Value Ω |
| Reference Example 1 | C-1 | OC-1R | A-1 | 100 | 1.2×10⁴ |
| Test Example 1 | | OC-1 | | 102 | 1.5×10⁴ |
| Test Example 2 | | OC-2 | | 106 | 0.45×10⁴ |
| Test Example 3 | | OC-3 | | 101 | 0.62×10⁴ |
| Test Example 4 | | OC-4 | | 103 | 1.25×10⁴ |
| Test Example 5 | | OC-5 | | 110 | 0.94×10⁴ |
| Test Example 6 | | OC-6 | | 98 | 0.54×10⁴ |
| Test Example 7 | | OC-7 | | 130 | 0.63×10⁴ |
| Test Example 8 | | OC-8 | | 150 | 2.38×10° |
| Test Example 9 | | OC-9 | | 156 | 0.45×10⁴ |
| Comparative Example 1 | | OC-10 | | 64 | 0.52×10⁴ |
| Reference Example 2 | | OC-2R | | 130 | 0.25×10³ |

### Production of Separator with Porous Insulating Layer

### 1. Slurry Preparation

A 5 L planetary disperser was used for the slurry preparation.

An α-alumina (Al₂O₃) having a particle diameter of 2 µm and a specific surface area of 2 m²/g, PVDF (Solef5130, manufactured by Solvay), lithium carbonate, cyclohexylbenzene (CHB), and biphenyl (BP) were dispersed in water or N-methyl pyrrolidone (NMP) at a proportion described in Table 7 below, thereby preparing slurry for a porous insulating layer.

**[Table 7]**

| Specification of Porous Insulating Layer of Separator | | | | | | |
|---|---|---|---|---|---|---|
| | Inorganic Filler | | Gas Generating Agent | | Binder | |
| | 1 | 2 | 1 | 2 | 1 | 2 |
| | % | % | % | % | % | % |
| OC-3R | α-Al₂O₃ | - | Lithium Carbonate | - | PVDF | |
| | 0.0 | - | 86.0 | - | 4.0 | - |
| OC-4R | α -Al₂O₃ | | Lithium Carbonate | CHB | PVDF | - |
| | 43.0 | | 21.5 | 21.5 | 4.0 | - |

A separator substrate (porosity 50%, thickness of 16 µm) formed by sequentially stacking a PP layer, a PE layer, and a PP layer was prepared. The separator substrate is coated with the slurry for the porous insulating layer by using a gravure coater. By doing so, a separator having one porous surface on which a porous insulating layer (a thickness is from 4 to 5 µm) is formed was obtained.

### [Sample Production]

A sample (K-1) for the heat generation resistance measurement was prepared with the same method as the above method by using the specification of the cathode (C-1) and the specification of the anode (A-1) shown in Table 4 and the separator with the porous insulating layer shown in Table 7.

### [Heat Resistance Measurement]

The produced sample cell (K1) was sandwiched by a heat block at a restrictive pressure of 0.2 kgf/cm², and the measurement condition was set to raise the temperature from room temperature to approximately 200°C at 5°C/min. At this time, an alternating resistance value (Ω) can be obtained at respective frequencies (for example, 1 kHz, 10 kHz, and 100 kHz). An example of the result is shown below. Table 8 shows values of resistance increasing start temperatures and maximum resistance values measured for the samples. In addition, Reference Example 5 shows a test result of using a separator which does not have a porous insulating layer.

**[Table 8]**

| Heat Resistance Measurement Test Results | | | | | |
|---|---|---|---|---|---|
| | Cathode | Separator Heat-resistance Layer | Anode | Resistance Increasing Start Temperature °C | Maximum Resistance Value Ω |
| Reference Example 3 | C-1 | OC-3R | A-1 | 182 | 1.28×10⁴ |
| Reference Example 4 | | OC-4R | | 203 | 1.38×10⁴ |
| Reference Example 5 | | OC-2R | | 142 | 0.21×10³ |

### Battery Production

### Wound-type Battery (Design Capacity of 1 Ah)

### 1. Winding

A wound-type battery (design capacity of 1 Ah) was produced by using the overcoat layer shown in Table 5 and the separator with a porous resistance layer (60.5 mm x 450 mm) shown in Table 7.

The anode A-1 (front surface/back surface), the separator (the porous insulating layer is disposed so as to be in contact with the cathode C-1), the cathode C-1 (back surface/front surface), and the separator (the porous insulating layer is disposed so as to be in contact with the cathode C-1) were stacked and wound, and then are press formed. Next, an aluminum tab was bonded to the margin portion of the cathode C-1 by using an ultrasonic bonding machine, and a nickel tab was bonded to a margin portion of the anode A-1 by using an ultrasonic bonding machine. The laminate is sandwiched therebetween and three sides thereof were heat-sealed.

### 2. Electrolytic Solution

Before injecting an electrolytic solution, the obtained product was reduced-dried with a vacuum drier at 70°C for 12 hours. 4.7 ± 0.1 g of an electrolytic solution (1 mol-LiPF₆, EC/DEC = 3/7 (vol. ratio) and 1.0 weight% of an additive VC) was injected, and then heat-sealing was performed while being evacuated.

### 3. Activation Treatment

The battery after injecting the electrolytic solution was held for 24 hours. Next, the battery was subjected to a constant-current charging (0.05 C-CC) at 0.05 C for 4 hours, and then was suspended for 12 hours. Thereafter, the battery was subjected to a constant-current and constant-voltage charging (0.1 C-CCCV) to 4.2 V at 0.1 C, suspended for 30 minutes, and then subjected to a constant-current discharging (0.1 C-CC) to 2.8 V at 0.1 C. Further, a charge and discharge cycle (charging of 4.2 V at 0.1 C-CCCV and discharging of 2.8 V at 0.1 C-CC) was repeated 5 times, and then the battery was stored in a fully charged state of 4.2 V (SOC 100%) at 25°C for 5 days. A battery D-1 was thus obtained.

### [Test Example and Comparative Example]

### [Crushing Test]

A crushing test was performed by using the wound-type battery (design capacity of 1 Ah) including a cathode and an anode produced in Reference Example 1. The central portion of the battery (cell) was pressed in a cylinder having a diameter of 10 mm at a speed of 1 mm/sec and crushed up to 50% of the depth of the battery thickness, and then the cathode and the anode were short-circuited in a battery container. As a result of performing the crushing test 5 times by using the battery produced with the same specification, the heat generation suppression effect could be confirmed in 4 times.

As a comparative example, a wound-type battery (design capacity of 1 Ah) was produced using a cathode provided with no overcoat layer in the specification of Reference Example 1 (Comparative Example 2). The same crushing test was performed 5 times, and no heat generation suppression effect could be confirmed in all the tests.

Hereinafter, the crushing test results (Table 7) are shown, the crushing test being performed using the batteries according to the other overcoat layer specification produced by the same specification as Reference Example 1 (the batteries including the cathode of the overcoat specification of OC-1 to OC-9 shown in Table 5 are defined as Examples 1 to 9) and the batteries according to the separator specification (the batteries including the separator of the insulating layer specification of OC-3R and OC-4R shown in Table 7 are defined as Reference Examples 6 and 7). As a comparative example, a wound-type battery (design capacity of 1 Ah) was produced using a separator provided with no overcoat layer in the specification of Reference Example 6 (Comparative Example 3). The same crushing test was performed 5 times, and no heat generation suppression effect could be confirmed in all the tests.

**[Table 9]**

| Crushing Test | |
|---|---|
| Test | Confirmed Number of Times of Heat Generation Suppression Effect (n=5) |
| Reference Example 1 | 4/5 |
| Example 1 | 4/5 |
| Example 2 | 3/5 |
| Example 3 | 2/5 |
| Example 4 | 2/5 |
| Example 5 | 3/5 |
| Example 6 | 3/5 |
| Example 7 | 4/5 |
| Example 8 | 2/5 |
| Example 9 | 2/5 |
| Comparative Example 1 | 2/5 |
| Reference Example 6 | 2/5 |
| Reference Example 7 | 3/5 |
| Comparative Example 2 | 0/5 |
| Comparative Example 3 | 0/5 |

Five batteries each produced with Examples 1 to 9 and Reference Examples 1, 6 and 7 were charged to SOC 200% at 1 C (at 1 C for 2 hours), a wound body was inserted into a case with a CID mechanism, the overcharge test was performed, and then a frequency at which the current interrupt mechanism was operated was examined. As a result, it was observed that there was a significant difference as compared with the battery (Comparative Example 2) produced using the cathode with no overcoat layer and the battery (Comparative Example 3) produced using the separator (porosity 45%, thickness of 20 µm) with no porous insulating layer, as a comparative example. The results are shown in Table 10 below.

**[Table 10]**

| Overcharge Test Results | | | | |
|---|---|---|---|---|
| | Cathode | Cathode OC Layer | Anode | Gas Generation Amount Gas Generation Ratio |
| Reference Example 1 | C-1 | OC-1R | A-1 | 5.5 |
| Example 1 | | OC-1 | | 5.6 |
| Example 2 | | OC-2 | | 5.2 |
| Example 3 | | OC-3 | | 5.4 |
| Example 4 | | OC-4 | | 5.1 |
| Example 5 | | OC-5 | | 4.9 |
| Example 6 | | OC-6 | | 5.1 |
| Example 7 | | OC-7 | | 4.9 |
| Example 8 | | OC-8 | | 4.8 |
| Example 9 | | OC-9 | | 5.0 |
| Comparative Example 1 | | OC-10 | | 4.9 |
| Comparative Example 2 | | OC-2R | | 1.0 |
| | | | | |

| | Cathode | Separator with Porous Insulating Layer | Anode | Gas Generation Amount ml |
|---|---|---|---|---|
| Reference Example 6 | C-1 | OC-3R | A-1 | 4.2 |
| Reference Example 7 | | OC-4R | | 4.1 |
| Comparative Example 3 | | - | | 1.1 |

Five batteries each produced with Examples 1 to 9 and Reference Examples 1, 6 and 7 were charged to SOC 200% at 1 C (at 1 C for 2 hours), a wound body was inserted into a case with a CID mechanism, the overcharge test was performed, and then a frequency at which the current interrupt mechanism was operated was examined. As a result, it was observed that there was a significant difference as compared with the battery (Comparative Example 2) produced using the cathode with no overcoat layer and the battery (Comparative Example 3) produced using the separator (porosity 45%, thickness of 20 µm) with no porous insulating layer, as a comparative example. The results are shown in Table 11 below.

**[Table 11]**

| Overcharge Test | |
|---|---|
| Test | Confirmed Number of Times of Heat Generation Suppression Effect (n=5) |
| Reference Example 1 | 4/5 |
| Example 1 | 5/5 |
| Example 2 | 3/5 |
| Example 3 | 3/5 |
| Example 4 | 3/5 |
| Example 5 | 4/5 |
| Example 6 | 5/5 |
| Example 7 | 5/5 |
| Example 8 | 4/5 |
| Example 9 | 4/5 |
| Comparative Example 1 | 3/5 |
| Reference Example 6 | 3/5 |
| Reference Example 7 | 4/5 |
| Comparative Example 2 | 2/5 |
| Comparative Example 3 | 1/5 |

### Reference Signs List

- 10, 20: Electrode layer
- 11,21: Anode current collector
- 12, 22: Anode mixture layer
- 13,23: Separator
- 14, 24: Porous insulating layer
- 15, 25: Cathode mixture layer
- 16, 26: Cathode current collector

## Claims

1. A lithium ion secondary battery comprising:
a current collector;
an electrode including a cathode or an anode that is provided on at least one surface of the current collector;
a separator that separates the cathode and the anode from each other;
a porous insulating layer that is formed between the cathode and the separator; and
a non-aqueous electrolyte,
wherein the porous insulating layer is formed of a binding material containing polyvinylidene fluoride and a melting point lowering agent,
wherein the melting point lowering agent is a copolymer of a vinylidene fluoride monomer and another fluorine-containing monomer or an oxygen-containing monomer, and a content of the melting point lowering agent contained in the binding material is from 1 to 50% by mass, and
wherein the melting point lowering agent lowers one or more of a melting start temperature or a melting peak temperature of the binding material, which is measured by differential scanning calorimetry in accordance with JIS 7121 under coexistence with the non-aqueous electrolyte, as compared to a case of using only polyvinylidene fluoride.

2. The lithium ion secondary battery according to claim 1, wherein the porous insulating layer contains one or more of an inorganic oxide filler or a gas generating agent.

3. The non-aqueous electrolyte secondary battery according to claim 1 or 2, wherein the copolymer is poly(vinylidene fluoride-hexafluoropropylene) or poly(vinylidene fluoride-oxyethyl ene).

4. The lithium ion secondary battery according to claim 2 or 3, wherein the inorganic oxide filler is at least one selected from the group consisting of aluminum oxide, aluminum hydroxide, boehmite, magnesia, magnesium hydroxide, zirconia, titania, silica, silicon dioxide, silicon carbide, aluminum nitride, and boron nitride.

5. The lithium ion secondary battery according to any one of claims 2 to 4, wherein the gas generating agent is at least one selected from the group consisting of lithium carbonate, lithium hydrogencarbonate, sodium carbonate, potassium carbonate, magnesium carbonate, calcium carbonate, sodium hydrogencarbonate, potassium hydrogencarbonate, magnesium hydrogencarbonate, and calcium hydrogencarbonate.

6. The lithium ion secondary battery according to any one of claims 1 to 5, wherein the non-aqueous electrolyte contains at least one gas generating compound selected from the group consisting of a cycloalkyl benzene compound, an alkylbenzene compound, a biphenyl compound, and an alkylbiphenyl compound.

## Patentansprüche

1. Lithium-Ionen-Sekundärbatterie, die Folgendes umfasst:
einen Stromkollektor;
eine Elektrode, die eine Kathode oder eine Anode umfasst und die auf mindestens einer Oberfläche des Stromkollektors vorgesehen ist;
einen Separator, der die Kathode und die Anode voneinander trennt;
eine poröse Isolierschicht, die zwischen der Kathode und dem Separator gebildet ist; und
einen nicht-wässrigen Elektrolyten,
wobei die poröse Isolierschicht aus einem Bindematerial gebildet ist, das Polyvinylidenfluorid und ein schmelzpunktsenkendes Mittel enthält,
wobei das schmelzpunktsenkende Mittel ein Copolymer aus einem Vinylidenfluoridmonomer und einem anderen fluorhaltigen Monomer oder einem sauerstoffhaltigen Monomer ist, und der Gehalt des schmelzpunktsenkenden Mittels, das in dem Bindematerial enthalten ist, 1 bis 50 Masseprozent beträgt und
wobei das schmelzpunktsenkende Mittel im Vergleich zu einem Fall, in dem nur Polyvinylidenfluorid verwendet wird, eine oder mehrere der Schmelzstarttemperaturen oder Schmelzspitzentemperaturen des Bindematerials senkt, die durch Differential-Scanning-Kalorimetrie gemäß JIS 7121 unter Koexistenz mit dem nicht-wässrigen Elektrolyten gemessen wird.

2. Lithium-Ionen-Sekundärbatterie nach Anspruch 1, wobei die poröse Isolierschicht einen oder mehrere anorganische Oxidfüllstoffe oder ein Gaserzeugungsmittel enthält.

3. Sekundärbatterie mit nichtwässrigem Elektrolyt nach Anspruch 1 oder 2, wobei das Copolymer Poly(vinylidenfluorid-hexafluorpropylen) oder Poly(vinylidenfluorid-oxyethylen) ist.

4. Lithium-Ionen-Sekundärbatterie nach Anspruch 2 oder 3, wobei der anorganische Oxidfüllstoff mindestens einer ist, der aus der Gruppe bestehend aus Aluminiumoxid, Aluminiumhydroxid, Böhmit, Magnesiumoxid, Magnesiumhydroxid, Zirkoniumdioxid, Titandioxid, Kieselerde, Siliziumdioxid, Siliziumkarbid, Aluminiumnitrid und Bornitrid ausgewählt ist.

5. Lithium-Ionen-Sekundärbatterie nach einem der Ansprüche 2 bis 4, wobei das Gaserzeugungsmittel mindestens eines ist, das aus der Gruppe bestehend aus Lithiumcarbonat, Lithiumhydrogencarbonat, Natriumcarbonat, Kaliumcarbonat, Magnesiumcarbonat, Calciumcarbonat, Natriumhydrogencarbonat, Kaliumhydrogencarbonat, Magnesium, Hydrogencarbonat und Calciumhydrogencarbonat ausgewählt ist.

6. Lithium-Ionen-Sekundärbatterie nach einem der Ansprüche 1 bis 5, wobei der nichtwässrige Elektrolyt mindestens eine gaserzeugende Verbindung enthält, die aus der Gruppe bestehend aus einer Cycloalkylbenzolverbindung, einer Alkylbenzolverbindung, einer Biphenylverbindung und einer Alkylbiphenylverbindung ausgewählt ist.

## Revendications

1. Batterie secondaire lithium-ion comprenant :
un collecteur de courant ;
une électrode comprenant une cathode ou une anode qui est prévue sur au moins une surface du collecteur de courant ;
un séparateur qui sépare la cathode et l'anode l'une de l'autre ;
une couche isolante poreuse qui est formée entre la cathode et le séparateur ; et
un électrolyte non aqueux,
dans laquelle la couche isolante poreuse est formée d'un matériau de liaison contenant du fluorure de polyvinylidène et un agent abaissant le point de fusion,
dans laquelle l'agent abaissant le point de fusion est un copolymère d'un monomère de fluorure de vinylidène et d'un autre monomère contenant du fluor ou d'un monomère contenant de l'oxygène, et une teneur de l'agent abaissant le point de fusion contenu dans le matériau de liaison est de 1 à 50% en masse, et
dans laquelle l'agent abaissant le point de fusion abaisse une ou plusieurs d'une température de début de fusion ou d'une température de pic de fusion du matériau de liaison, qui est mesurée par calorimétrie différentielle à balayage conformément à JIS 7121 en coexistence avec l'électrolyte non aqueux, par rapport à un cas où l'on utilise uniquement du fluorure de polyvinylidène.

2. Batterie secondaire au lithium-ion selon la revendication 1, dans laquelle la couche isolante poreuse contient un ou plusieurs parmi une charge d'oxyde inorganique ou un agent générateur de gaz.

3. Batterie secondaire à électrolyte non aqueux selon la revendication 1 ou 2, dans laquelle le copolymère est le poly(fluorure de vinylidène-hexafluoropropylène) ou le poly(fluorure de vinylidène-oxyéthylène).

4. Batterie secondaire au lithium-ion selon la revendication 2 ou 3, dans laquelle la charge d'oxyde inorganique est au moins une charge choisie dans le groupe constitué d'oxyde d'aluminium, d'hydroxyde d'aluminium, de boehmite, de magnésie, d'hydroxyde de magnésium, de zircone, d'oxyde de titane, de silice, de dioxyde de silicium, de carbure de silicium, de nitrure d'aluminium et de nitrure de bore.

5. Batterie secondaire au lithium-ion selon l'une quelconque des revendications 2 à 4, dans laquelle l'agent générateur de gaz est au moins un agent choisi dans le groupe constitué de carbonate de lithium, d'hydrogénocarbonate de lithium, de carbonate de sodium, de carbonate de potassium, de carbonate de magnésium, de carbonate de calcium, d'hydrogénocarbonate de sodium, d'hydrogénocarbonate de potassium, d'hydrogénocarbonate de magnésium et d'hydrogénocarbonate de calcium.

6. Batterie secondaire au lithium-ion selon l'une quelconque des revendications 1 à 5, dans laquelle l'électrolyte non aqueux contient au moins un composé générateur de gaz choisi dans le groupe constitué par un composé cycloalkylbenzène, un composé alkylbenzène, un composé biphényle, et un composé alkylbiphényle.
